# EUROPEAN PATENT APPLICATION

(11) **EP 4 009 154 A1**
(43) Date of publication of application: **08.06.2022**
(21) Application number: 21209843.8
(22) Date of filing: 23.11.2021
(51) Int. Cl.: G06F 3/0482, G06F 3/04847

(54) **METHODS AND SYSTEMS FOR ELECTRONIC CHECKLIST TAGS**

(30) Priority: 02.12.2020 US 202063120630 P; 05.11.2021 US 202117453696
(71) Applicant: Honeywell International Inc., Charlotte, NC 28202 (US)
(72) Inventor: CONAWAY, Cody Ryan, Charlotte, 28202 (US); CROUCH, Steven Curtis, Charlotte, 28202 (US); HOLDER, Barbara, Charlotte, 28202 (US)
(74) Representative: Haseltine Lake Kempner LLP

(57) **Abstract**

Systems and methods for tags of electronic checklists are disclosed. A method may include: receiving input selecting a checklist to be displayed as a checklist GUI; determining whether the checklist includes at least one tag element, the at least one tag element being a user tag element, a system tag element, or a display tag element, the user input tag element being able to control a state of a system of the vehicle based on user input, the system tag element being able to update the checklist GUI based on a current state of the system of the vehicle, the display tag element indicating a displayed style template of the checklist element is different from a default style template; in response to determining the checklist includes at least one tag element, rendering the checklist GUI in accordance with the at least one tag element; and displaying the checklist GUI.

## Description

### CROSS-REFERENCE TO RELATED APPLICATION(S)

This patent application claims priority to U.S. Provisional Application No. 63/120,630, filed on December 2, 2020, and U.S. Nonprovisional Application No. 17/453,696 filed on November 5, 2021, the entireties of which are incorporated herein by reference.

### TECHNICAL FIELD

Various embodiments of the present disclosure relate generally to methods and systems for electronic checklists and, more particularly, to methods and systems for tags of electronic checklists.

### BACKGROUND

Aircraft checklists and vehicle checklists in general may contain references to data sources that are not contained in the checklist steps or notes, which is where the data may be most relevant. For instance, the data, such as a current state of a system or whether an indicator light is on or off, may be found somewhere else in the cockpit (or navigation control interface, in general) other than where it is useful. Therefore, in general, the data may be in other places besides the checklist itself. This may cause the crew to search for the data outside the checklist. For instance, the process of searching for the data may result in looking across the cockpit at different displays/indicators than the one display displaying the checklist. These types of actions may increase crew cognitive and physical workload due to visual switching of attentional resources between separate sources of information. Therefore, there may be a challenge in reducing crew cognitive and physical workload.

The present disclosure is directed to overcoming one or more of these abovereferenced challenges.

### SUMMARY OF THE DISCLOSURE

According to certain aspects of the disclosure, systems, methods, and computer-readable medium are disclosed for tags of electronic checklists. Aspects of the present disclosure may enable users of a single checklist system to control current states of external systems while being informed both of current states of external systems and relevant information (e.g., status/condition/category of checklist). By maintaining a consistent visual design, user expectations for visual presentation of information may be set, resulting in standardized user behavior, which may further improve safety for a user operating a vehicle. Accordingly, aspects of this disclosure provide a technical solution to one or more of the technical problems mentioned above, and in particular, an improved checklist graphical user interface (checklist GUI) that is simpler and easier to use than prior checklists.

For instance, a method may include: receiving user/system input selecting a checklist to be displayed as a checklist GUI; determining whether the checklist includes at least one tag element for a checklist element of the checklist, the at least one tag element being a user tag element, a system tag element, or a display tag element, the user tag element being able to control a state of a system of the vehicle based on a user input, the system tag element being able to update the checklist GUI based on a current state of the system of the vehicle, the display tag element indicating a displayed style template of the checklist element is different from a default style template of the checklist element; in response determining the checklist includes at least one tag element, rendering the checklist GUI in accordance with the at least one tag element; and displaying the checklist GUI.

A system may include a memory storing instructions; and a processor operatively connected to the memory and configured to execute the instructions to perform operations. The operations may include: receiving user/system input selecting a checklist to be displayed as a checklist GUI; determining whether the checklist includes at least one tag element for a checklist element of the checklist, the at least one tag element being a user tag element, a system tag element, or a display tag element, the user tag element being able to control a state of a system of the vehicle based on a user input, the system tag element being able to update the checklist GUI based on a current state of the system of the vehicle, the display tag element indicating a displayed style template of the checklist element is different from a default style template of the checklist element; in response determining the checklist includes at least one tag element, rendering the checklist GUI in accordance with the at least one tag element; and displaying the checklist GUI.

A non-transitory computer-readable medium may store instructions that, when executed by a processor, cause the processor to perform a method. The method may include: receiving user/system input selecting a checklist to be displayed as a checklist GUI; determining whether the checklist includes at least one tag element for a checklist element of the checklist, the at least one tag element being a user tag element, a system tag element, or a display tag element, the user tag element being able to control a state of a system of the vehicle based on a user input, the system tag element being able to update the checklist GUI based on a current state of the system of the vehicle, the display tag element indicating a displayed style template of the checklist element is different from a default style template of the checklist element; in response determining the checklist includes at least one tag element, rendering the checklist GUI in accordance with the at least one tag element; and displaying the checklist GUI.

Additional objects and advantages of the disclosed embodiments will be set forth in part in the description that follows, and in part will be apparent from the description, or may be learned by practice of the disclosed embodiments.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an exemplary vehicle system environment for displaying electronic checklists, according to one or more embodiments.
FIGS. 2 and 3 depict GUIs for exemplary electronic checklists, according to one or more embodiments.
FIG. 4 depicts an exemplary block diagram of a system for electronic checklists, according to one or more embodiments.
FIG. 5 depicts a flowchart for a method for electronic checklists, according to one or more embodiments.
FIGS. 6A-6C depict exemplary GUIs for electronic checklists, according to one or more embodiments.
FIG. 7 depicts an example system that may execute techniques presented herein.

### DETAILED DESCRIPTION OF EMBODIMENTS

Various embodiments of the present disclosure relate generally to electronic checklists.

In general, the present disclosure is directed to tag elements of electronic checklists. In particular, methods and system of the present disclosure may display checklist GUIs that include one or more tag elements. The tag element may indicate a portion (up to all of a particular element) of a checklist element of a checklist that are to be displayed in a style different from standard (or default) for checklist elements. The tag element may also update to accurately reflect a current state/status of a system remote from the checklist or an indicator of the system, so that users (e.g., pilots) may not have to remove their gaze from the checklist GUI. The remote systems may transmit data indicating status or state of themselves and/or the a state of indicator lights of the remote systems to the checklist system so that the checklist GUI may update the display to be accurate. Lastly, the tag element may enable a user to control the remote systems to change status or state by a user input on the checklist GUI. In this manner, the checklist GUI may inform the user of contextual information (e.g., warning/caution/normal/category of tasks), inform the user of a current state of remote systems, and/or enable the user to control the remote systems via the checklist GUI.

While this disclosure describes the systems and methods with reference to electronic checklists of aircraft, it should be appreciated that the present systems and methods are applicable to checklists of vehicles, including those of drones, automobiles, ships, or any other autonomous and/or Internet-connected vehicle.

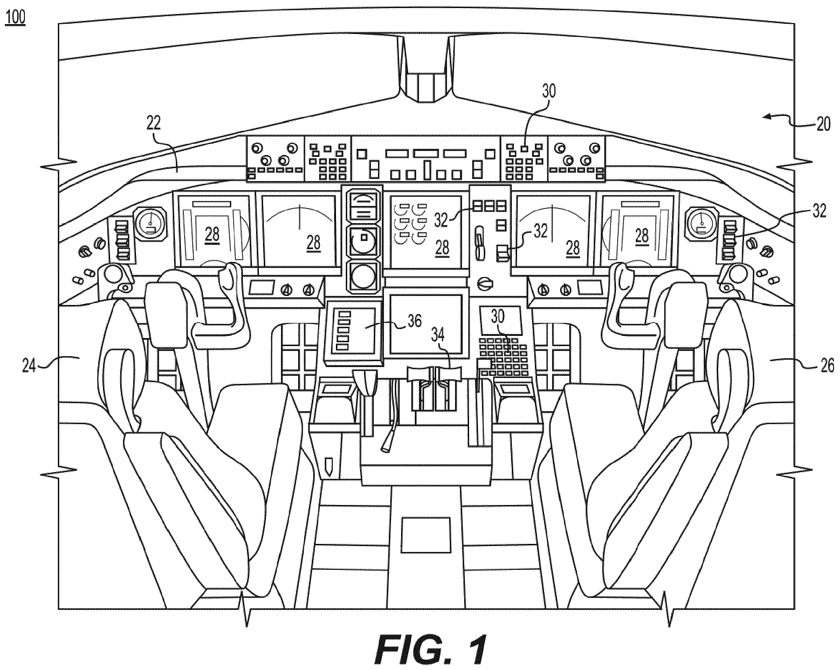

As shown in FIG. 1, an exemplary system environment 100 for an electronic checklist is depicted, according to one or more embodiments. Specifically, FIG. 1 is a fragmentary perspective view illustrating the inside of an aircraft cockpit 20. Although the context of the following discussion is with respect to GUIs of touch screen displays used in aircraft, it should be understood that the teachings herein pertain to touch screen displays used in any type of vehicle including, but not limited to, land based vehicles such as automobiles and trains as well as watercraft and spacecraft. Moreover, this disclosure may also apply to non-touch based displays, and may also be used with a cursor control device (CCD) or a dedicated checklist controller (DCC, such as a dedicated joystick). Additionally, the teachings herein are not limited to vehicle applications. Rather, the teachings herein may also be used together with touch screen displays that are employed in stationary applications such as information kiosks and automatic teller machines as well as with touch screen displays that are hand held or otherwise not mounted to a surface.

Aircraft cockpit 20 includes an instrument panel 22 positioned to be accessible from a pilot seat 24 and a copilot seat 26. Instrument panel 22 includes a variety of front displays 28 and various control features such as buttons 30, switches 32, and throttle controls 34. Also mounted on instrument panel 22 is a control touch screen display 36. Moreover, the front displays 28 may also be touch screen displays.

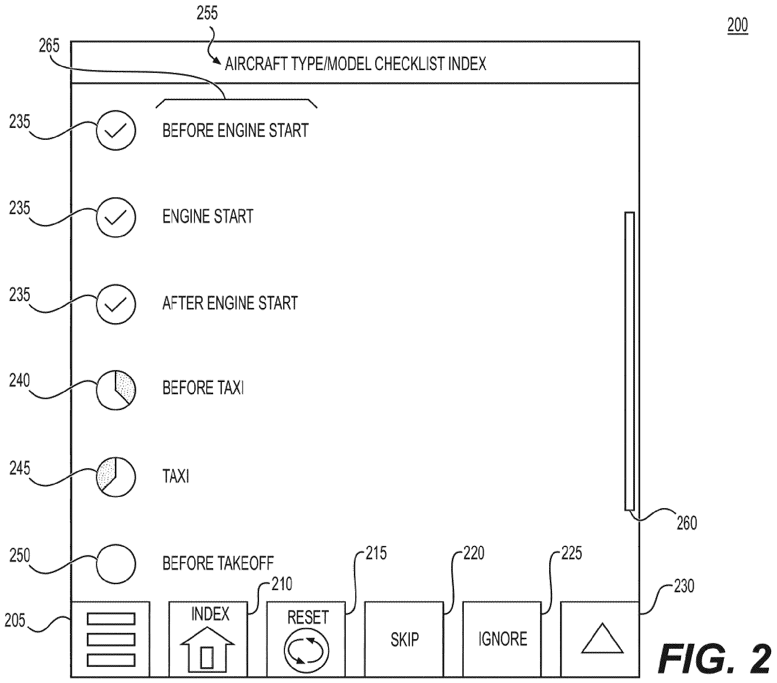

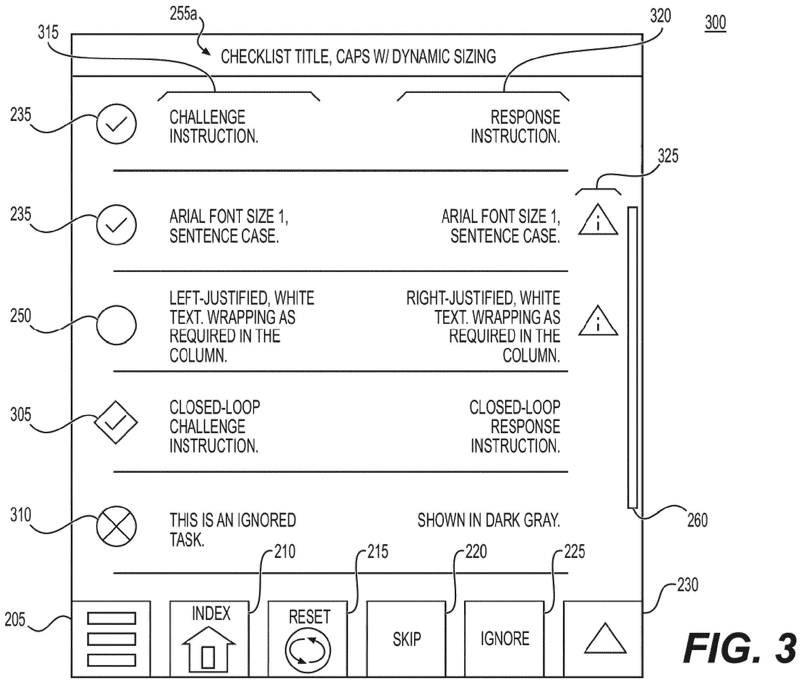

One of the front displays 28 or the control touch screen display 36 (called herein "vehicle manager touch screen") may be configured to operate as a vehicle manager that may display interactive electronic checklists and/or navigation or other vehicle system data. Specifically, a processor may execute a vehicle manager program (comprised of instructions executable by the processor) that causes the vehicle manager touch screen to display a vehicle manager display. For instance, the vehicle manager display may include one or more GUIs as disclosed herein (or variations thereof), such as GUI 200 and GUI 300 (as depicted in FIGS. 2 and 3, respectively).

The processor may cause the vehicle manager touch screen to display the vehicle manager display by generating images and transmitting the images to the vehicle manager touch screen to be displayed. Alternatively, the processor may generate instructions and information and transmit the instructions and information to a graphics processing unit (GPU). The GPU may generate the images to be displayed on the vehicle manager touch screen. The vehicle manager program may be stored in a memory. The memory may be connected to the processor so that the processor may receive stored instructions or data, and the processor may process the instructions, stored data, and received information, in accordance with the vehicle manager program. The memory and the processor may be connected to the vehicle manager touch screen either directly or indirectly. Collectively the memory, the processor, and the vehicle manager touch screen may be referred to as a "vehicle manager system." In one embodiment, the vehicle manager system may be an electronic procedure system of a vehicle.

For instance, the vehicle manager program may control a functionality and configuration of the vehicle manager touch screen, in accordance with a loadable checklist control file (called herein a "loadable database"), e.g., received from a cloud service. The vehicle manager program may store the loadable database in the memory. The vehicle manager program may control the configuration of the vehicle manager touch screen, based on user inputs to the system, data from other vehicle systems, and/or FMS data from, e.g., a cloud FMS. Specifically, the vehicle manager program may display the vehicle manager display to depict an electronic checklist in accordance with the loadable database, and receive user inputs to view and/or to change the configuration of the vehicle manager touch screen.

Generally, user inputs may be a touch interaction with the vehicle manager touch screen (e.g., capacitive, resistive, and/or optical sensing), a user input on a keyboard, a mouse, a scroll wheel, or any other system-defined manner of selecting and interacting with the system. The processor may receive the user inputs and perform specific actions based on the user inputs, in accordance with the vehicle manager program.

FIGS. 2 and 3 depict exemplary GUIs for an electronic checklist, according to one or more embodiments. Specifically, FIGS. 2 and 3 may depict a functionality and configuration of the vehicle manager touch screen, in accordance with a loadable database received from a cloud service.

In FIG. 2, GUI 200 may include a group of home icons (including one or more of a system function menu icon 205, an index icon 210, a reset icon 215, a skip icon 220, an ignore icon 225, a display control drop down menu icon 230), one or more completed task indicators 235, one or more partially completed task indicators 240 and 245, one or more incomplete task indicators 250, a header 255, a scroll bar indicator 260, and one or more task titles 265. A processor, as described above, may cause GUI 200 to be displayed on the vehicle manager touch screen of the system. The GUI 200 may be a home menu for a vehicle manager system. One or more tasks (a task may be an indicator associated with a task title) may represent a sub-checklist. A user may select the task, and the sub-check list corresponding to the selected task may be displayed; for instance, FIG. 3 may depict an example of a sub-check list that is displayed in GUI 300. In each checklist (parent checklist), any task may represent a sub-checklist of the parent checklist (e.g., a sub-check list to a sub-checklist is a grandchild to the home menu).

In FIG. 3, the GUI 300 may include the same features as the GUI 200, however it may also be different, and it may include a different header 255a, one or more system completed task indicators 305, one or more ignored task indicators 310, one or more challenge instructions 315, one or more response instructions 320, and one or more additional information indicators 325. Specifically, as mentioned above, when a user selects a task with a sub-checklist, the processor may update the display to display the sub-checklist. The different header 255a may correspond to one of the one or more task titles 265 associated with the selected task (or a sub-checklist name if different than the task title of the one or more task titles 265). The one or more challenge instructions 315 and the one or more response instructions 320 may each be associated with an indicator. The one or more challenge instructions 315 may contain text associated with the task the user is to focus attention on. The one or more response instructions 320 may contain text associated with the task the crew is to the focus on. The one or more additional information indicators 325 may be checklist impact notifications (CINs). The one or more additional information indicators 325 may be associated with tasks that have additional information related to notes, cautions, and warnings. CINs may provide access to notes, cautions, and warnings for individual tasks by a message popup.

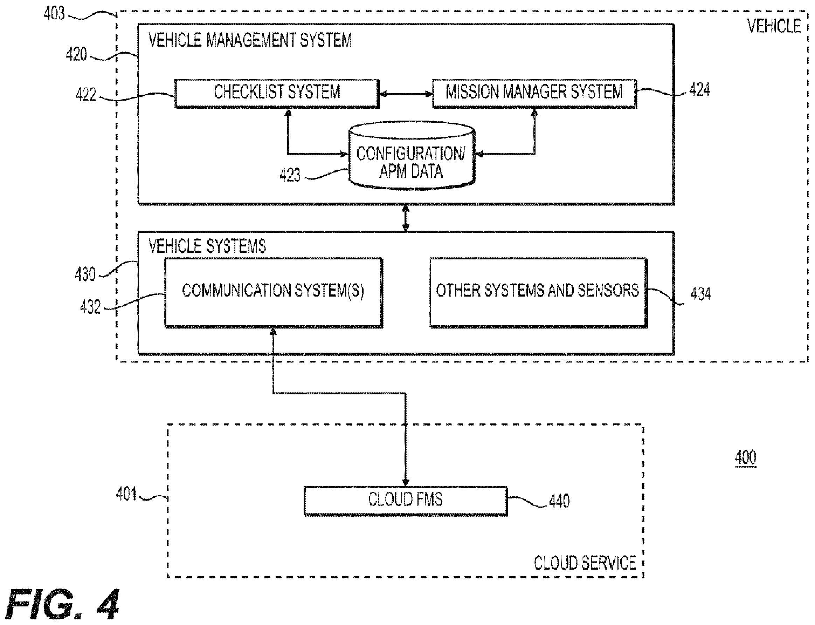

FIG. 4 depicts an exemplary block diagram of a system 400 for electronic checklists, according to one or more embodiments. The system 400 may include a cloud service 401 and/or a vehicle 403. The cloud service 401 and the vehicle 403 may communicate over a network using, e.g., a TCP/IP communication infrastructure, or the cloud service 401 and the vehicle 403 may communicate over the network and/or satellite communications infrastructure, etc.

The cloud service 401 may include a cloud flight management system (FMS) 440 and/or other software as a service (SaaS) systems. The cloud FMS 440 may be a cloud-based platform that provides FMS services to any user who has authorized access to the cloud FMS 440. Specifically, the cloud FMS 440 may provide FMS micro-services. The FMS micro-services may be FMS services organized as a collection of specialized modular services. In some implementations, the FMS micro-services may be software applications stored, at least in part, in one or more servers remote from the vehicle 403, for cloud-based access from the vehicle 403. The FMS micro-services may be modular services which are developed, deployed, and scaled independently of each other, messaging-enabled to communicate with various components within the cloud FMS 440, and organized around capabilities. The FMS micro-services may include, for example, flight planning services, inflight navigation services, airport specific services, ground communication services, weather services, services for computing fuel scenarios, services for computing optimization scenarios, services for offsetting deviations, and services for computing approach procedures. The FMS micro-services may be implemented as hardware, software, and/or a combination of hardware and software.

The vehicle 403 may include a vehicle management system 420 and vehicle systems 430. In one embodiment, the vehicle management system 420 may be an electronic procedure system of a vehicle. The vehicle management system 420 may include a checklist system 422, a mission manager system 424, and/or a configuration memory 423 storing configuration data and/or aircraft profile management (APM) data. The configuration data may include configuration rules that generally apply to checklists and/or display of information. The APM data may include additional configuration rules specific to different aircraft defined by original equipment manufacturers (OEM). The vehicle systems 430 may include one or more communications system(s) 432 and other systems and sensors 434.

The one or more communications system(s) 432 may include one or more of a cellular communications system, a Wi-Fi system, a radio communications system, a satellite communications system, etc. The one or more communications system(s) 432 may receive and transmit messages to/from the vehicle 403 from/to the cloud service 401 (e.g., the cloud FMS 440). The one or more communications system(s) 432 may also communicate with the vehicle management system 420. For instance, the one or more communications system(s) 432 may receive FMS data from the cloud FMS 440, and transmit the FMS data to the vehicle management system 420.

The other systems and sensors 434 may include one or more of navigation systems (e.g., GPS systems), engine systems, actuation systems, control systems, temperature systems, life systems, external sensors (e.g., weather radar, temperature, pressure, density, velocity sensors) or internal sensors (e.g., cabin pressure sensor), etc. of the vehicle 403. The other systems and sensors 434 may communicate with the vehicle management system 420. For instance, the other systems and sensors 434 may transmit vehicle systems data to the vehicle management system 420.

The checklist system 422 may communicate with the configuration memory 423, the mission manager system 424, and/or the other systems and sensors 434. The checklist system 422 may receive a loadable database from a checklist designer system hosted by, e.g., the cloud FMS 440 or other remote system. The checklist system 422 may also receive messages from the mission manager system 424; the configuration/APM data from the configuration memory 423; and the vehicle systems data of the other systems and sensors 434 (collectively, "input data"). The checklist system 422 may output checklists GUIs and/or information for checklist GUIs to the mission manager system 424, for displaying checklist GUIs by the mission manager system 424, in accordance with the loadable database, the messages, the configuration/APM data, and the vehicle systems data.

For instance, the checklist system 422 may extract one or more data structure(s) and one or more function(s) from the loadable database; extract rulebook rules from a rulebook (e.g., included in the loadable database); extract data from databases of the vehicle 403; extract configuration rules from the configuration/APM data; extract sensor data and/or synoptic data from vehicle systems data; extract notifications from the messages from the mission manager system 424 (e.g., a selection based on user inputs or a crew alerting system (CAS) message); and extract phase of flight information from messages from the mission manager system 424 (collectively, "checklist inputs"). The checklist system 422 may validate the checklist inputs, e.g., to ensure correct source(s), correct format, etc.

As discussed above, the loadable database may include the one or more function(s) and the one or more data structure(s) for generation and control of the checklist GUIs. Specifically, a data structure may include content and arrangement information. The content may be displayed in a checklist GUI in accordance with arrangement information. The configuration rules of the configuration/APM data may include display rules for how the content is to be displayed in accordance with the arrangement information. A function may include program code for how system and/or user inputs are to update the checklist GUI (e.g., as outputs).

For instance, the one or more data structure(s) may include information about minimum equipment lists (MELs), master MELs (MMELs), aircraft flight manuals (AFMs), configuration deviation lists (CDLs), etc. The program code of the one or more function(s) may control checklist GUIs and data based on events. Events may be based phase of flight, CAS messages, flight plan data, flight data, synaptics, and/or pilot action(s). For example, a function may start based on a phase of flight event (e.g., transition between takeoff and cruise), and the function may generate and display a first checklist GUI corresponding to one or more tasks for the transition from takeoff to cruise. As another example, a function may start based on an emergency event (e.g., information indicating a sensor detecting smoke, which may be included in the vehicle systems data), and generate and display a second checklist GUI corresponding to one or more tasks for resolving the emergency event. As discussed above, the checklist GUIs may be based on the one or more data structure(s), the configuration/APM data, and/or the one or more function(s).

The mission manager system 424 may communicate with the checklist system 422, the configuration memory 423, the other systems and sensors 434, and the cloud FMS 440 (via, e.g., the one or more communications system(s) 432). The mission manager system 424 may receive messages from the checklist system 422 (e.g., information/instructions/graphics for displaying the checklist GUI); the configuration/APM data from the configuration memory 423; the vehicle systems data of the other systems and sensors 434; and/or the FMS data from the cloud FMS 440.

The mission manager system 424 may manage MEL data, manage flight plan buffer and/or display, and/or manage checklist display and interactions from a user, such as a crew of an aircraft. Specifically, the mission manager system 424 may display one or more of the checklist GUIs, and receive and process user inputs. For instance, the mission manager system 424 may render GUIs for managing phase of flight based checklists, GUIs for managing CAS/emergency checklists, and/or GUIs for aircraft configurations, and manage crew selections with respect to the rendered GUIs. For instance, the mission manager may render the GUIs, as based on the messages from the checklist system 422; the configuration/APM data from the configuration memory 423; the vehicle systems data of the other systems and sensors 434; and/or the FMS data from the cloud FMS 440.

In one aspect of the disclosure, the checklist system 422 may display checklist GUIs that include one or more tag elements. A tag element may be a portion of content of the content and arrangement information. For instance, the tag element may indicate a portion (up to all of a particular item) of a checklist element of particular checklists of the checklist system are to be displayed in a style different than standard for checklist elements. Checklist elements may include headers 255, one or more task titles 265, one or more challenge instructions 315, and/or the one or more response instructions 320. In particular, there may be a plurality of style templates for checklist elements (e.g., a first header style template, a second header style template, ..., a first task title style template, a second task title style template, ..., a first challenge instruction style template, a second challenge instruction style template, ..., a first response instruction style template style template, a second response instruction style template, ..., etc.), and the tag element may indicate the portion of the checklist element is to be displayed in accordance with a particular style template that is different than a standard style template for the checklist element (e.g., the tag element may indicate the first challenge instruction style template instead the second challenge instruction style template, which is standard for the one or more challenge instructions 315). Each style template may be different from the other style templates. As an example, the tag element may indicate a displayed style template different from the default style template. The style templates may be different by at least one style feature. A style feature may include: font type, text size, text spacing, text color, text highlighting, text border, font style (underlining, italicizing, holding, etc.), and/or font effect.

Specifically, the content and arrangement information may be stored in an extensible Markup language (XML) (or other data structure) document. In this case, the tag elements may be included in a start tag of a particular checklist element (e.g., a challenge instruction element) to indicate the particular checklist element is to be displayed entirely in a particular style template, or wrapped around (e.g., with a start indicator and end indicator) a portion of displayable content of the particular checklist element.

The one or more tag elements may be: display tag elements, system tag elements, or user tag elements. User tag elements may include system tag elements and control logic to enable a user to cause a change in state in an external system external of the checklist system 422 for each of the system tag elements based on a user input on corresponding display tag elements of the system tag elements. For instance, the checklist system 422 may receive a user input on a display tag element of a system tag element of a user tag element; determine a corresponding external system to the user tag element; transmit an instruction to the corresponding external system in accordance with the user input; and execute control logic of the system tag element (discussed below, to update the GUI accordingly). System tag elements may include two or more display tag elements and control logic to enable the checklist system 422 to update a checklist GUI to reflect a current state of the external system to correspond to one of the two or more display tag elements based on data input from other systems of the vehicle. For instance, the checklist system 422 may process input data through the control logic to determine whether a change trigger is satisfied for a particular external system; and, if so, update a display tag element in accordance with the input data. Display tag elements may cause a portion (up to all of a particular item) of a checklist element of a checklist GUI to be displayed in accordance with a particular style template.

For instance, the display tag element may be: author-defined to indicate a certain level of importance or a certain category of activity; defined to correspond to a color/style of a physical button/icon in a cockpit (discussed below); or defined to correspond to certain status or condition associated with the checklist or checklist element. As an example, display tag elements may be defined for emergency or caution conditions, emergency or caution statuses, or emergency or caution checklists. The display tag elements may indicate to a user the emergency or caution conditions, emergency or caution statuses, or emergency or caution checklists by the portion of the checklist element (e.g., headers 255, one or more task titles 265, one or more challenge instructions 315, and/or the one or more response instructions 320) is a certain style template. For instance, display tag elements may be used to indicate emergency/warning checklist tasks by a first color (e.g., red/amber), caution checklist tasks by a second color (e.g., cyan/yellow), and normal checklist tasks (which would be standard for checklist elements) by a third color (e.g., white). One of skill in the art would understand that the display tag elements may be different from the standard style templates by at least one style feature and not just by text color. Thus, according to the present aspect of the disclosure, methods and system of the present disclosure may enable the checklist system 422 to inform users of a level of importance, category of activity, a state of a different system (discussed below), a status, or a condition by having at least one different style feature for portions of the content to be displayed.

System tag elements may include two or more display tag elements and a system input change function (e.g., particular control logic as defined by an author for a particular checklist) for a checklist element. The checklist system 422 may receive input data (discussed above) and process the input data through the system input change function to determine whether a change trigger is satisfied for a particular external system. The system input change function may define the external system to which it reflects on the checklist GUI. The system input change function may define the change trigger as a change in the external system, such as an indicator state (e.g., on/off indicator button or light of the external system), by a sensor indicating a state (e.g., on or off), or a reported state of the external system (e.g., system is on/off). The indicator state, sensed state, or reported state may be periodically reported by the external system/sensor, periodically pulled by request from the external system/sensor by the checklist system 422, and/or the external system/sensor may report a change in the indicator state, sensed state, or reported state when/as changes occur. If the change trigger is not satisfied, the checklist system 422, for the system tag element, may continue displaying a first of the two or more display tag elements (e.g., corresponding to a current state); if the change trigger is satisfied, the checklist system 422, for the system tag element, may update the checklist GUI to display a second of the two or more display tag elements (e.g., corresponding to a current state as indicated by the trigger condition). As an example, a checklist element may correspond to "On" or "Off states of an external system, and the checklist system 422 may change the checklist element displayed in response to the trigger condition being satisfied. The system tag element may define a mapping between states and display tag elements to determine which display tag element to be used to control the display of the checklist element.

Therefore, in this aspect of the disclosure, a current state of an external system (to the checklist system 422) may be graphically represented on the checklist GUI to inform a user of the current state of the external system. Note, one of skill in the art would understand that others states besides "On" and "Off are able to be displayed in accordance with further display tag elements being mapped, such as "Stand by," "Starting," "Non-responsive," etc. Moreover, the at least one different style feature for the two or more display tag elements may correspond to colors/effects of physical/software buttons/icons of the external systems. For instance, if an indicator light of the external system may be a blue light to indicate "On," the checklist element associated with the "On"/"Off' state of the external system may display a blue field when the current state is "On" and no blue field when the current state is "Off." In this manner, a user may be informed about current states of external system while within a checklist GUI, without having to refer to a separate system. Thus, according to the present aspect of the disclosure, methods and system of the present disclosure may enable the checklist system 422 to inform users of a state of a different system by having at least one different style feature for portions of the content to be displayed, e.g., as indicated or reported by the external system.

User tag elements may include a system tag element and a user input function (e.g., particular control logic as defined by an author for a particular checklist) for a checklist element. As discussed above, the system tag element enables the checklist GUI to reflect a current state of the external system on the checklist GUI in accordance with the two or more display tag elements and the mapping to the current state of the external system by the system input change function. The checklist system 422 may receive user input data (e.g., from the mission manager system 424) regarding user inputs onto the checklist GUI; process the user input data through the user input function to determine whether a user input was on a region of the checklist GUI associated with the checklist element; in response to determining the user input was on a region of the checklist GUI associated with the checklist element, generate and transmit an instruction message to the external system to initiate a change in state. The instruction message may instruct the external system to change from a first state to a second state. One of skill in the art would recognize that changing states may be achieved in several different methods, such as toggling between, selecting among, etc. If the instruction message is received and executed upon by the external system, the external system may report a change in state that the system tag element may process to update the checklist GUI. The user input function may define the external system to that the user input function controls from the checklist GUI, or the user input function may refer to the external system that is defined by the system input change function (or vice versa). For instance, the checklist system 422 may: receive a user input and determine whether the user input selected a checklist element associated with a user tag element; if so, generate and transmit an instruction message to change a first state to a second state of an external system; and update the checklist element, in accordance with a system tag element of the user tag element (e.g., based on receiving a confirmation message or update on state message from the external system).

Therefore, in this aspect of the disclosure, a current state of an external system (to the checklist system 422) may be controlled by a user input on a checklist element and then graphically represented on the checklist GUI to inform a user of the current state of the external system (e.g., whether the control was successful). In this manner, a user may control and be informed about current states of external system while within a checklist GUI, without having to refer to a separate system. Thus, according to the present aspect of the disclosure, methods and system of the present disclosure may enable the checklist system 422 to control (in response to user inputs within the checklist GUI system and not in a separate external system) and inform users of a state of a different system by having at least one different style feature for portions of the content to be displayed, e.g., as indicated or reported by the external system.

Therefore, the systems and methods of the present disclosure may enable users of the checklist system 422 to control current states of external systems and be informed, both of current states of external systems and relevant information (e.g., status/condition/category of checklist). Using systems and methods of the disclose may result in consistent visual design; consistent visual design may set expectations and convey information; understanding expectations and conveying information may set standardized behaviors; standardized behaviors may drive safety for user's experience.

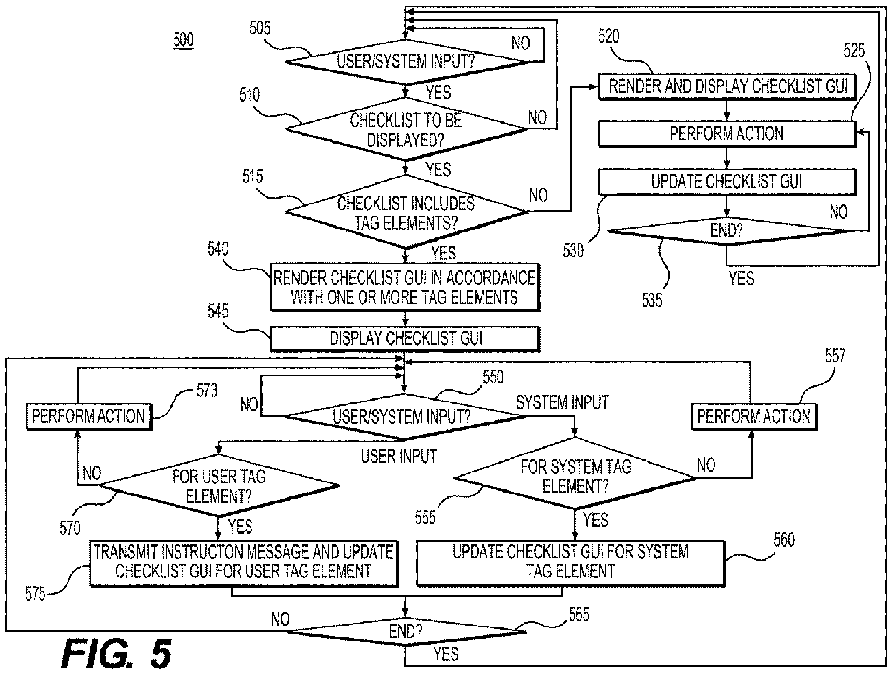

Turning to FIG. 5, FIG. 5 depicts a flowchart 500 for a method for electronic checklists, according to one or more embodiments. The flowchart 500 may be performed by the checklist system 422 to display checklist GUIs that include one or more tag elements. The checklist system 422 may start the process of the flowchart 500 by determine whether a user/system input is received (block 505). For instance, the checklist system 422 may receive user input data from the mission manager system 424 or input data from several systems on board the vehicle. In response to determining the user/system input is not received (block 505: No), the checklist system 422 may then return to determine whether a user/system input is received (block 505).

In response to determining the user/system input is received (block 505: Yes), the checklist system 422 may then determine whether a checklist is selected to be displayed (block 510). For instance, the checklist system 422 may determine whether the user input or system input selects a checklist GUI to be displayed. In response to determining the checklist is not selected to be displayed (block 510: No), the checklist system 422 may then return to determine whether a user/system input is received (block 505).

In response to determining the checklist is selected to be displayed (block 510: Yes), the checklist system 422 may then determine whether the checklist includes one or more tag elements (block 515). For instance, the checklist system 422 may determine whether the data structure for a checklist includes one or more tag elements by parsing the XML document and determining whether the parsed XML document includes any tag indicators; if so, determine the checklist includes one or more tag elements; if not, determine the checklist does not include one or more tag elements.

In response to determining the checklist does not include the one or more tag elements (block 515: No), the checklist system 422 may then render and display the checklist GUI (block 520). For instance, the checklist system 422 may obtain the content and arrangement information for the checklist; generate the checklist GUI and display the checklist GUI. The checklist system 422 may then perform an action (block 525). For instance, the checklist system 422 may receive a user input indicating completion of a task, etc. The checklist system 422 may then update the checklist GUI (block 530). For instance, the checklist system 422 may update corresponding checklist elements based on rules, etc. of the checklist system 422 and the loadable database. The checklist system 422 may then determine whether the checklist is at an end (block 535). For instance, the checklist system 422 may determine whether all tasks of the checklist are complete. In response to determining the checklist is not at an end (block 535: No), the checklist system 422 may then return to perform another action (block 525). In response to determining the checklist is at an end (block 535: Yes), the checklist system 422 may then return to determine whether a user/system input is received (block 505).

In response to determining the checklist does include the one or more tag elements (block 515: Yes), the checklist system 422 may then render the checklist GUI in accordance with the one or more tag elements (block 540). For instance, the checklist system 422 may determine style templates for display tag elements and current states for system tag elements (to determine style templates corresponding to the current state); and generate the checklist GUI in accordance with the style templates for display tag elements and current states for system tag elements, as discussed above with respect to FIG. 4.

The checklist system 422 may then display the checklist GUI (block 545). For instance, the checklist system 422 may transmit graphics to the mission manager system 424 to be displayed to a user.

The checklist system 422 may then determine whether a user/system input is received (block 550). For instance, the checklist system 422 may receive user input data from the mission manager system 424 or input data from several systems on board the vehicle. In response to determining the user/system input is not received (block 550: No), the checklist system 422 may then return to determine whether the user/system input is received (block 550).

In response to determining the user/system input is received and determining that it is a system input (block 550: System Input), the checklist system 422 may then determine whether the system input is for a system tag element (block 555). For instance, the checklist system 422 may determine whether the XML document of the checklist includes a user tag element (which includes a system tag element) or a system tag element; if so, whether the system input is from an external system corresponding to the system tag element; if so, determine the system input is for the system tag element. In response to determining the system input is not for the system tag element (block 555: No), the checklist system 422 may then perform an action (block 557). For instance, the checklist system 422 may update a data point on the checklist GUI or check other trigger conditions using the system input. In response to determining the system input is for the system tag element (block 555: Yes), the checklist system 422 may then update the checklist GUI for the system tag element (block 560). For instance, the checklist system 422 may change the style template of the checklist element from a displayed style template mapped to a first state to a default style template mapped to a second state, as discussed above with respect to FIG. 4. The checklist system 422 may then determine whether the checklist is at an end (block 565). In response to determining the checklist is not at an end (block 565: No), the checklist system 422 may then return to determine whether a user/system input is received (block 550). In response to determining the checklist is at an end (block 565: Yes), the checklist system 422 may then return to determine whether a user/system input is received (block 505).

In response to determining the user/system input is received and determining that it is a user input (block 550: User Input), the checklist system 422 may then determine whether the user input is for a user tag element (block 570). For instance, the checklist system 422 may determine whether the XML document of the checklist includes a user tag element; if so, whether the user input is on a region associated with the user tag element; if so, determine the user input is for the user tag element., as discussed above with respect to FIG. 4. In response determining the user input is not for the user tag element (block 570: No), the checklist system 422 may then perform an action (block 573). For instance, the checklist system 422 may update a task based on the user input, or navigate to another checklist, etc. In response to determining the user input is for the user tag element (block 570: Yes), the checklist system 422 may then (1) transmit an instruction message to an external system and (2) update the checklist GUI for the user tag element (block 575). For instance, the checklist system 422 may determine the external system; generate an instruction to change from a current state to a second state; and transmit the instruction message including the instruction to the external system, as discussed above with respect to FIG. 4. The checklist system 422 may then determine whether the checklist is at an end (block 565). In response to determining the checklist is not at an end (block 565: No), the checklist system 422 may then return to determine whether a user/system input is received (block 550). In response to determining the checklist is at an end (block 565: Yes), the checklist system 422 may then return to determine whether a user/system input is received (block 505).

Note that the checklist system 422 may receive one or more user inputs and/or system inputs at a time, and process each of the one or more user inputs and/or system inputs separately (e.g., sequentially or in parallel).

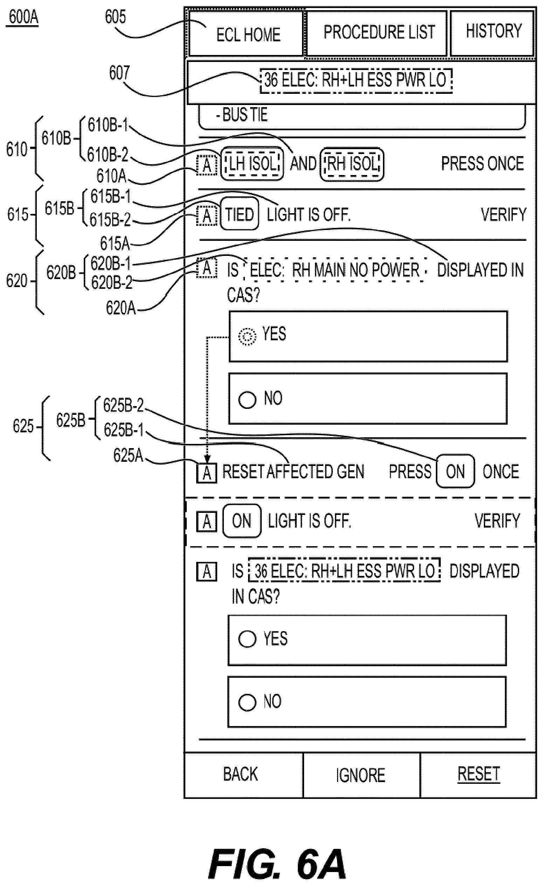

FIGS. 6A-6C depict exemplary GUIs for electronic checklists, according to one or more embodiments. Turning to FIGS. 6A-6C, FIGS. 6A-6C may depict exemplary GUIs 600A, 600B, and 600C, respectively, for electronic checklists, according to one or more embodiments. Specifically, FIGS. 6A-6C may depict different arrangements of display contents and/or invoking associated functions for display tag elements, system tag elements, and user tag elements, in accordance with the data reference function of FIG. 4 above.

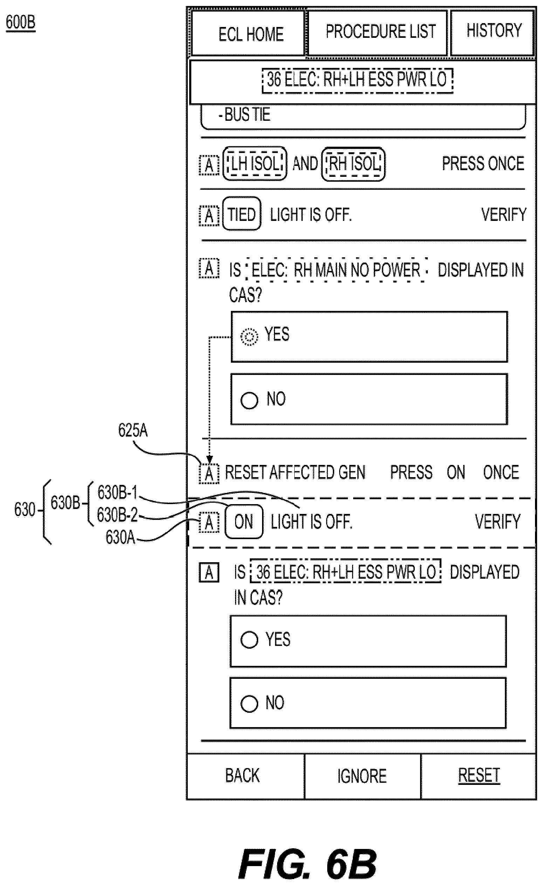

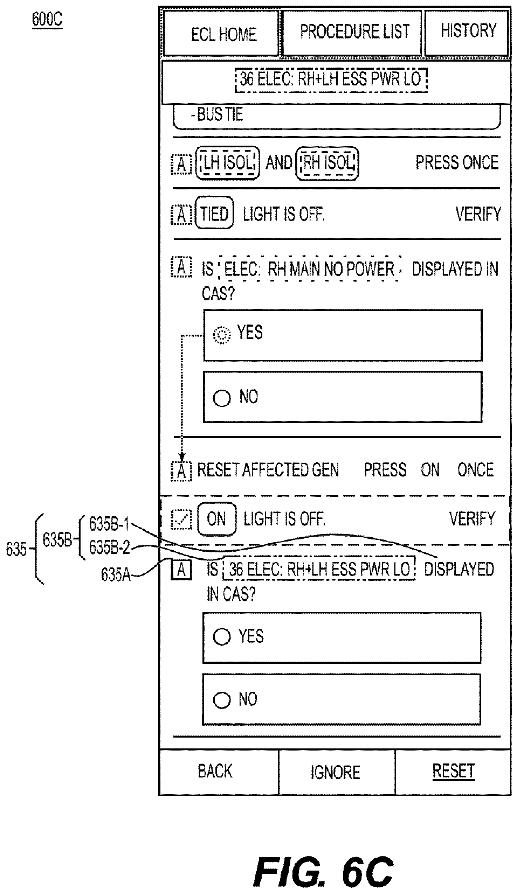

In particular, turning to FIG. 6A, GUI 600A may depict an interface 605 for an electronic checklist system of a vehicle. The interface 605 may display a checklist with header 607, which may be associated with a display tag element to change the default display style template of a header to an emergency style template, which may change a text color. The checklist may include a plurality of tasks 610-625 (labeled in GUI 600A), task 630 (labeled in GUI 600B), and task 635 (labeled in GUI 600C). The tasks may include task status indicators 610A-635A and content 610B-635B. Content 610B-635B may each default content 610B-1 through 635B-1 and tagged content 610B-2 through 635B-2. Tagged content 610B-2 through 635B-2 may depict several different examples of tags of electronic checklists. Each task may comprise a task status indicator and one or more contents. For example, as shown in Fig. 6A, task 610 may comprise a task indicator 610A and content 610B, and content 610B may further comprise default content 610B-1 and tagged content 610B-2. As another example, task 615 may comprise a task indicator 615A and content 615B, and content 615B may further comprise default content 615B-1 and tagged content 615B-2. Similarly, task 620 may comprise a task indicator 620A and content 620B, and content 620B may further comprise default content 620B-1 and tagged content 620B-2. Further, task 625 may comprise a task indicator 625A and content 625B, and content 625B may further comprise default content 625B-1 and tagged content 625B-2. With respect to Fig. 6B, task 630 may comprise a task indicator 630A and content 630B, and content 630B may further comprise default content 630B-1 and tagged content 630B-2. With respect to Fig. 6C, task 635 may comprise a task indicator 635A and content 635B, and content 635B may further comprise default content 635B-1 and tagged content 635B-2.

With respect again to Fig. 6A, tagged content 610B-2 may further correspond to a display tag element for display of a particular color (if static) or may correspond to a system tag element or user tag element (if dynamic) to display a status of a blue indicator light of an external system (text is blue if on; otherwise, white). Tagged content 615B-2 may correspond to a system tag element or user tag element to display a status of an indicator light of an external system is "On"/"Off." Tagged content 620B-2 may corresponded to a display tag element for display of a particular color, in this case cyan/yellow to indicate a particular caution status. Tagged content 625B-2 may correspond to a user tag element to control a state of an external system and display a status of the external system, for instance by receiving a user input on 625B-2, thus causing the checklist to update GUI 600A to GUI 600B to change the display of 625B-2. With respect to Fig. 6B, tagged content 630B-2 may correspond to a system tag element or user tag element to display a status of an indicator light of an external system is "On"/"Off." With respect to Fig. 6C, tagged content 635B-2 may corresponded to a display tag element for display of a particular color, in this case red/amber to indicate a particular warning status.

Various embodiments of the present disclosure, as described above in the examples of FIGS. 1-6, may be implemented using one or more of the device 700.

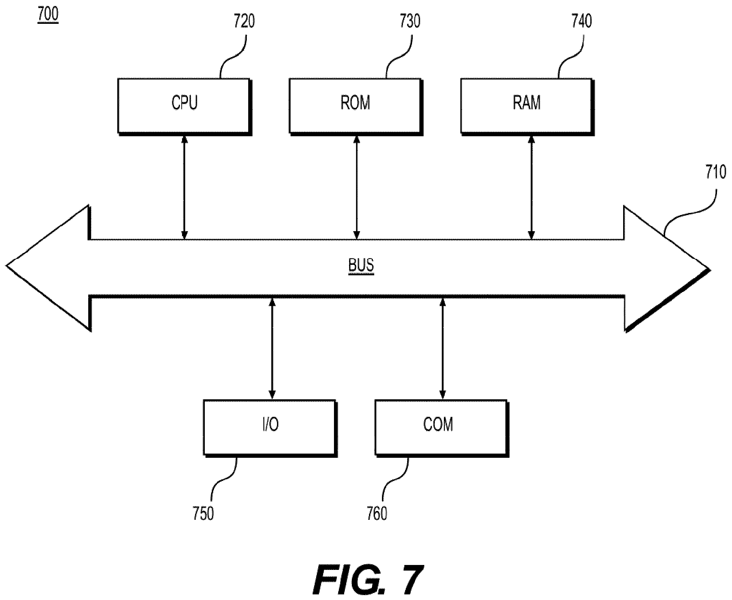

FIG. 7 depicts an example system that may execute techniques presented herein. FIG. 7 is a simplified functional block diagram of a device 700 that may be configured to execute techniques described herein, according to exemplary embodiments of the present disclosure. Specifically, the device 700 (which may be a computer or a "platform" that may not be a single physical computer infrastructure) may include a data communication interface 760 for packet data communication. The device 700 may also include a central processing unit ("CPU") 720, in the form of one or more processors, for executing program instructions. CPU 720 may be any type of processor device including, for example, any type of special purpose or a general-purpose microprocessor device. As will be appreciated by persons skilled in the relevant art, CPU 720 also may be a single processor in a multi-core/multiprocessor system, such system operating alone, or in a cluster of computing devices operating in a cluster or server farm. CPU 720 may be connected to a data communication infrastructure 710, for example, a bus, message queue, network, or multi-core messagepassing scheme. The device 700, in addition to including a data communication infrastructure 710, may also include may include a main memory 740, such as, for example, random access memory (RAM), and also may include a secondary memory 730. Secondary memory 730, e.g., a read-only memory (ROM), may be, for example, a hard disk drive or a removable storage drive. Such a removable storage drive may comprise, for example, a floppy disk drive, a magnetic tape drive, an optical disk drive, a flash memory, or the like. The removable storage drive in this example reads from and/or writes to a removable storage unit in a well-known manner. The removable storage unit may comprise a floppy disk, magnetic tape, optical disk, etc., which is read by and written to by the removable storage drive. As will be appreciated by persons skilled in the relevant art, such a removable storage unit generally includes a computer usable storage medium having stored therein computer software and/or data.

In alternative implementations, secondary memory 730 may include other similar means for allowing computer programs or other instructions to be loaded into device 700. Examples of such means may include a program cartridge and cartridge interface (such as that found in video game devices), a removable memory chip (such as an EPROM, or PROM) and associated socket, and other removable storage units and interfaces, which allow software and data to be transferred from a removable storage unit to device 700.

Device 700 also may include a communications interface ("COM") 760. Communications interface 760 allows software and data to be transferred between device 700 and external devices. Communications interface 760 may include a modem, a network interface (such as an Ethernet card), a communications port, a PCMCIA slot and card, or the like. Software and data transferred via communications interface 760 may be in the form of signals, which may be electronic, electromagnetic, optical, or other signals capable of being received by communications interface 760. These signals may be provided to communications interface 760 via a communications path of device 700, which may be implemented using, for example, wire or cable, fiber optics, a phone line, a cellular phone link, an RF link, or other communications channels.

The hardware elements, operating systems and programming languages of such equipment are conventional in nature, and it is presumed that those skilled in the art are adequately familiar therewith. The device 700 also may include input and output ports 750 to connect with input and output devices such as keyboards, mice, touchscreens, monitors, displays, etc. Of course, the various system functions may be implemented in a distributed fashion on a number of similar platforms, to distribute the processing load. Alternatively, the systems may be implemented by appropriate programming of one computer hardware platform.

The systems, apparatuses, devices, and methods disclosed herein are described in detail by way of examples and with reference to the figures. The examples discussed herein are examples only and are provided to assist in the explanation of the apparatuses, devices, systems, and methods described herein. None of the features or components shown in the drawings or discussed below should be taken as mandatory for any specific implementation of any of these the apparatuses, devices, systems, or methods unless specifically designated as mandatory. For ease of reading and clarity, certain components, modules, or methods may be described solely in connection with a specific figure. In this disclosure, any identification of specific techniques, arrangements, etc. are either related to a specific example presented or are merely a general description of such a technique, arrangement, etc. Identifications of specific details or examples are not intended to be, and should not be, construed as mandatory or limiting unless specifically designated as such. Any failure to specifically describe a combination or sub-combination of components should not be understood as an indication that any combination or sub-combination is not possible. It will be appreciated that modifications to disclosed and described examples, arrangements, configurations, components, elements, apparatuses, devices, systems, methods, etc. can be made and may be desired for a specific application. Also, for any methods described, regardless of whether the method is described in conjunction with a flow diagram, it should be understood that unless otherwise specified or required by context, any explicit or implicit ordering of steps performed in the execution of a method does not imply that those steps must be performed in the order presented but instead may be performed in a different order or in parallel.

The general discussion of this disclosure provides a brief, general description of a suitable computing environment in which the present disclosure may be implemented. In one embodiment, any of the disclosed systems, methods, and/or graphical user interfaces may be executed by or implemented by a computing system consistent with or similar to that depicted and/or explained in this disclosure. Although not required, aspects of the present disclosure are described in the context of computer-executable instructions, such as routines executed by a data processing device, e.g., a server computer, wireless device, and/or personal computer. Those skilled in the relevant art will appreciate that aspects of the present disclosure can be practiced with other communications, data processing, or computer system configurations, including: Internet appliances, hand-held devices (including personal digital assistants ("PDAs")), wearable computers, all manner of cellular or mobile phones (including Voice over IP ("VoIP") phones), dumb terminals, media players, gaming devices, virtual reality devices, multi-processor systems, microprocessor-based or programmable consumer electronics, set-top boxes, network PCs, mini-computers, mainframe computers, and the like. Indeed, the terms "computer," "server," and the like, are generally used interchangeably herein, and refer to any of the above devices and systems, as well as any data processor.

Aspects of the present disclosure may be embodied in a special purpose computer and/or data processor that is specifically programmed, configured, and/or constructed to perform one or more of the computer-executable instructions explained in detail herein. While aspects of the present disclosure, such as certain functions, are described as being performed exclusively on a single device, the present disclosure may also be practiced in distributed environments where functions or modules are shared among disparate processing devices, which are linked through a communications network, such as a Local Area Network ("LAN"), Wide Area Network ("WAN"), and/or the Internet. Similarly, techniques presented herein as involving multiple devices may be implemented in a single device. In a distributed computing environment, program modules may be located in both local and/or remote memory storage devices.

Aspects of the present disclosure may be stored and/or distributed on non-transitory computer-readable media, including magnetically or optically readable computer discs, hard-wired or preprogrammed chips (e.g., EEPROM semiconductor chips), nanotechnology memory, biological memory, or other data storage media. Alternatively, computer implemented instructions, data structures, screen displays, and other data under aspects of the present disclosure may be distributed over the Internet and/or over other networks (including wireless networks), on a propagated signal on a propagation medium (e.g., an electromagnetic wave(s), a sound wave, etc.) over a period of time, and/or they may be provided on any analog or digital network (packet switched, circuit switched, or other scheme).

Throughout this disclosure, references to components or modules generally refer to items that logically can be grouped together to perform a function or group of related functions. Like reference numerals are generally intended to refer to the same or similar components. Components and modules can be implemented in software, hardware, or a combination of software and hardware. The term "software" is used expansively to include not only executable code, for example machine-executable or machine-interpretable instructions, but also data structures, data stores and computing instructions stored in any suitable electronic format, including firmware, and embedded software. The terms "information" and "data" are used expansively and includes a wide variety of electronic information, including executable code; content such as text, video data, and audio data, among others; and various codes or flags. The terms "information," "data," and "content" are sometimes used interchangeably when permitted by context.

Program aspects of the technology may be thought of as "products" or "articles of manufacture" typically in the form of executable code and/or associated data that is carried on or embodied in a type of machine-readable medium. "Storage" type media include any or all of the tangible memory of the computers, processors or the like, or associated modules thereof, such as various semiconductor memories, tape drives, disk drives and the like, which may provide non-transitory storage at any time for the software programming. All or portions of the software may at times be communicated through the Internet or various other telecommunication networks. Such communications, for example, may enable loading of the software from one computer or processor into another, for example, from a management server or host computer of the mobile communication network into the computer platform of a server and/or from a server to the mobile device. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links, or the like, also may be considered as media bearing the software. As used herein, unless restricted to non-transitory, tangible "storage" media, terms such as computer or machine "readable medium" refer to any medium that participates in providing instructions to a processor for execution.

The terminology used above may be interpreted in its broadest reasonable manner, even though it is being used in conjunction with a detailed description of certain specific examples of the present disclosure. Indeed, certain terms may even be emphasized above; however, any terminology intended to be interpreted in any restricted manner will be overtly and specifically defined as such in this Detailed Description section. Both the foregoing general description and the detailed description are exemplary and explanatory only and are not restrictive of the features, as claimed.

As used herein, the terms "comprises," "comprising," "having," including," or other variations thereof, are intended to cover a non-exclusive inclusion such that a process, method, article, or apparatus that comprises a list of elements does not include only those elements, but may include other elements not expressly listed or inherent to such a process, method, article, or apparatus.

In this disclosure, relative terms, such as, for example, "about," "substantially," "generally," and "approximately" are used to indicate a possible variation of ±10% in a stated value.

The term "exemplary" is used in the sense of "example" rather than "ideal." As used herein, the singular forms "a," "an," and "the" include plural reference unless the context dictates otherwise.

After reading this description, it will become apparent to a person skilled in the relevant art how to implement embodiments of the present disclosure using these or other computer systems and/or computer architectures. Although operations may be described as a sequential process, some of the operations may in fact be performed in parallel, concurrently, and/or in a distributed environment, and with program code stored locally or remotely for access by single or multi-processor machines. In addition, in some embodiments the order of operations may be rearranged without departing from the spirit of the disclosed subject matter.

It should be appreciated that in the above description of exemplary embodiments of the present description, various features of the present description are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claims requires more features than are expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment of the present description.

Furthermore, while some embodiments described herein include some but not other features included in other embodiments, combinations of features of different embodiments are meant to be within the scope of the present disclosure, and form different embodiments, as would be understood by those skilled in the art. For example, in the following claims, any of the claimed embodiments can be used in any combination.

Thus, while certain embodiments have been described, those skilled in the art will recognize that other and further modifications may be made thereto without departing from the spirit of the present disclosure, and it is intended to claim all such changes and modifications as falling within the scope of the present disclosure. For example, functionality may be added or deleted from the block diagrams and operations may be interchanged among functional blocks. Steps may be added to, deleted from, or repeated, in methods described herein, while remaining within the scope of the present disclosure.

The above disclosed subject matter is to be considered illustrative, and not restrictive, and the appended claims are intended to cover all such modifications, enhancements, and other implementations, which fall within the true spirit and scope of the present disclosure. Thus, to the maximum extent allowed by law, the scope of the present disclosure is to be determined by the broadest permissible interpretation of the following claims and their equivalents, and shall not be restricted or limited by the foregoing detailed description. While various implementations of the disclosure have been described, it will be apparent to those of ordinary skill in the art that many more implementations and implementations are possible within the scope of the disclosure. It is intended that the specification and examples be considered as exemplary only, with a true scope and spirit of the disclosure being indicated by the following claims.

## Claims

1. A computer-implemented method for electronic checklists of a vehicle, comprising:
receive user/system input selecting a checklist to be displayed as a checklist GUI;
determine whether the checklist includes at least one tag element for a checklist element of the checklist, the at least one tag element being a user tag element, a system tag element, or a display tag element, the user tag element being able to control a state of a system of the vehicle based on a user input, the system tag element being able to update the checklist GUI based on a current state of the system of the vehicle, the display tag element indicating a displayed style template of the checklist element is different from a default style template of the checklist element;
in response determining the checklist includes at least one tag element, rendering the checklist GUI in accordance with the at least one tag element; and
displaying the checklist GUI.

2. The computer-implemented method of claim 1, further comprising:
determining whether a change trigger is satisfied, wherein the change trigger is a change in one or more of an indicator state, a sensor indicating a state, or a reported state of one or more external systems; and
upon determining that a change trigger is satisfied, updating the checklist GUI to display a second display tag element.

3. The computer-implemented method of claim 1, further comprising:
determining whether a user input or a system input was received;
upon determining that a system input was received, determining whether the system input is for a system tag element; and
upon determining that the system input is for a system tag element, updating the checklist GUI for the system tag element.

4. The method of claim 1, further comprising:
determining whether a user input or a system input was received;
upon determining that a user input was received, determining whether the system input is for a user tag element; and
upon determining that the user input is for a user tag element, transmitting an instruction message to an external system and updating the checklist GUI for the user tag element.

5. The method of claim 4, further comprising:
upon determining that a user input is not for a user tag element, updating a task based on the user input or navigating to another checklist.

6. The method of claim 1, wherein the display tag element is defined to one or more of:
indicate a certain level of importance or a certain category of activity; or
correspond to certain status or condition associated with the checklist or checklist element.

7. The method of claim 1, wherein the display tag element indicates an emergency/warning checklist by a first color, a caution checklist task by a second color different from the first color, and a normal checklist task by a third color different from the first color and the second color.

8. A system for electronic checklists of a vehicle, the system comprising:
a memory storing instructions; and
a processor operatively connected to the memory and configured to execute the instructions to perform operations including:
receiving user/system input selecting a checklist to be displayed as a checklist GUI;
determining whether the checklist includes at least one tag element for a checklist element of the checklist, the at least one tag element being a user tag element, a system tag element, or a display tag element, the user tag element being able to control a state of a system of the vehicle based on a user input, the system tag element being able to update the checklist GUI based on a current state of the system of the vehicle, the display tag element indicating a displayed style template of the checklist element is different from a default style template of the checklist element;
in response determining the checklist includes at least one tag element, rendering the checklist GUI in accordance with the at least one tag element; and
displaying the checklist GUI.

9. The system of claim 8, the operations further comprising:
determining whether a change trigger is satisfied, wherein the change trigger is a change in one or more of an indicator state, a sensor indicating a state, or a reported state of one or more external systems; and
upon determining that a change trigger is satisfied, updating the checklist GUI to display a second display tag element.

10. The system of claim 8, the operations further comprising:
determining whether a user input or a system input was received;
upon determining that a system input was received, determining whether the system input is for a system tag element; and
upon determining that the system input is for a system tag element, updating the checklist GUI for the system tag element.

11. The system of claim 8, wherein:
determining whether a user input or a system input was received;
upon determining that a user input was received, determining whether the system input is for a user tag element; and
upon determining that the user input is for a user tag element, transmitting an instruction message to an external system and updating the checklist GUI for the user tag element.

12. The system of claim 11, wherein upon determining that a user input is not for a user tag element, updating a task based on the user input or navigating to another checklist.

13. The system of claim 8, wherein the display tag element is defined to one or more of:
indicate a certain level of importance or a certain category of activity; or
correspond to certain status or condition associated with the checklist or checklist element.

14. The system of claim 8, wherein the display tag element indicates an emergency/warning checklist by a first color, a caution checklist task by a second color different from the first color, and a normal checklist task by a third color different from the first color and the second color.

15. The system of claim 8, wherein determining whether the checklist includes at least one tag element for a checklist element of the checklist includes parsing an XML document and determining whether the parsed XML document includes one or more tag indicator.
